# EUROPÄISCHE PATENTSCHRIFT

(11) **EP 2 987 396 B1**
(45) Veröffentlichungstag und Bekanntmachung des Hinweises auf die Patenterteilung: **04.04.2018**
(21) Anmeldenummer: 15176399.2
(22) Anmeldetag: 13.07.2015
(51) Int. Cl.: A01D 41/127

(54) **BEDIENERASSISTENZSYSTEM FÜR EINE LANDWIRTSCHAFTLICHE ARBEITSMASCHINE**
OPERATOR ASSISTANCE SYSTEM FOR AN AGRICULTURAL WORK MACHINE
SYSTEME D'ASSISTANCE DU CONDUCTEUR POUR ENGIN AGRICOLE

(30) Priorität: 21.08.2014 DE 102014216593
(43) Veröffentlichungstag der Anmeldung: 24.02.2016
(73) Patentinhaber: Deere & Company, Moline, IL 61265 (US)
(72) Erfinder: Kormann, Georg, 66482 Zweibrücken (DE); Pinkston, Patrick E., Leclaire, IA Iowa 52753 (US); Tuncer, Zeynep, 66787 Wadgassen (DE)
(74) Vertreter: Holst, Sönke

(56) Entgegenhaltungen:
- EP-A1- 0 928 554
- EP-A1- 2 132 974
- EP-A2- 0 586 999
- DE-A1- 10 030 473
- DE-A1-102013 106 131

## Beschreibung

Die Erfindung betrifft ein Bedienerassistenzsystem für eine landwirtschaftliche Arbeitsmaschine, die wenigstens einen veränderbaren Betriebsparameter aufweist, der mehrere, unterschiedliche Ergebnisparameter des Arbeitsergebnisses der Arbeitsmaschine beeinflusst.

### Technologischer Hintergrund

Landwirtschaftliche Arbeitsmaschinen, wie Traktoren, Mähdrescher und Feldhäcksler, umfassen eine relativ große Anzahl an Aktoren zur Einstellung von Betriebsparametern, die zwecks Erzielung eines einwandfreien Ernteergebnisses bei angemessener Anwendung von Ressourcen in eine geeignete Position zu verbringen sind. Zu diesen Betriebsparametern gehören bei Erntemaschinen beispielsweise die Drehzahl des Verbrennungsmotors, die (den Erntegutdurchsatz definierende) Vortriebsgeschwindigkeit sowie Betriebsparameter von Erntegutbearbeitungseinrichtungen, wie bei einem Feldhäcksler die Schnitthöhe des Erntevorsatzes, die Fördergeschwindigkeit im Einzugskanal, die Anzahl der Häckselmesser einer Häckseltrommel und der Abstand zwischen zwei Walzen einer Erntegutnachbearbeitungseinrichtung. Bei einem Mähdrescher sind Dresch- und Reinigungsparameter einzustellen. Auch bei Traktoren sind verschiedene Einstellungen und Vorgaben durchzuführen, wie Vorgabe einer Vortriebsgeschwindigkeit und Eindringtiefe eines Bodenbearbeitungswerkzeugs beim Bodenbearbeiten.

Da insbesondere unerfahrene Bediener, wie sie bei der Ernte oftmals als Saisonkräfte eingesetzt werden, in der Regel große Schwierigkeiten dabei haben, die Betriebsparameter auf geeignete Werte einzustellen, zumal sie bei der Ernte vornehmlich andere Aufgaben durchzuführen haben, wie Lenken, Überwachen eines Überladevorganges etc., wurden in der Vergangenheit verschiedene Systeme vorgeschlagen, die dem Bediener geeignete Betriebsparameter vorschlagen, damit der Bediener sie einstellen kann, oder die den Betriebsparameter selbsttätig einstellen. Hierzu sei beispielsweise auf den Stand der Technik nach EP 0 928 554 A1 verwiesen, die einen Mähdrescher mit einem Fahrerassistenzsystem beschreibt, das nach Eingabe von Informationen über externe Erntebedingungen eine Auswahl von unterschiedlichen Zielvorgaben ermöglicht, anhand denen schließlich Vorschläge für Betriebsparameter gegeben werden. Die Zielvorgaben sind insbesondere die Flächenleistung (Durchsatz) und die sich ergebenden Verluste, wobei anhand einer zweidimensionalen Kurve, in der die Verluste abhängig von Durchsatz aufgetragen sind, auch eine Gewichtung beider Zielvorgaben vorgenommen werden kann. Diese Druckschrift zeigt die Merkmale des Oberbegriffs des Anspruchs 1. Die EP 2 042 019 A2 beschreibt ein Fahrerassistenzsystem, das dem Bediener ermöglicht, eine Änderung eines Betriebsparameters eines Mähdreschers vorzuschlagen und dann eine erwartete Tendenz für das Arbeitsergebnis anzeigt.

Die EP 0 586 999 A2 zeigt ein anderes Fahrerassistenzsystem, bei dem der Bediener Betriebsparameter eines Mähdreschers und die Wichtigkeit von Zielvorgaben eingeben kann und das System dann erwartete Arbeitsergebnisse ausgibt.

Bei einem anderen System "Mähdruschassistent MDA 120" der Fa. Aclantec GmbH aus dem Jahr 1995 kann der Bediener zur Vorausberechnung von Erntevorgängen auswählen, ob er einen Verlust oder eine Dringlichkeit der Ernte vorgibt. Das System gibt dann die jeweilige Durchsatzleistung oder die Geschwindigkeit für den Erntevorgang aus.

Die EP 2 132 974 A1 beschreibt einen Feldhäcksler, bei dem der Bediener eine Zielvorgabe hinsichtlich der zu erreichenden Verdichtbarkeit des Ernteguts eingeben kann. Das Bedienerassistenzsystem prüft anhand der Schnittlänge und der Feuchtigkeit des Ernteguts, ob die Zielvorgabe erreichbar ist und zeigt, wenn es die Zielvorgabe für nicht erreichbar ansieht, geeignete, andere Betriebsparameter des Feldhäckslers an.

In der DE 100 30 473 A1 wird eine Eingabeeinrichtung einer Arbeitsmaschine beschrieben, mit der Betriebsparameter der Arbeitsmaschine angezeigt und eingegeben werden können.

In der DE 10 2013 106 131 A1 wird ein Fahrerassistenzsystem für landwirtschaftliche Arbeitsmaschinen beschrieben, das eine Auswahl unterschiedlicher Prozessführungsstrategien wie "maximaler Durchsatz", "minimaler Kraftstoffeinsatz", "hohe Druschqualität" oder "ausgeglichen" ermöglicht. Es werden jeweils auch die aus einem Wechsel der Prozessführungsstrategie resultierenden Auswirkungen auf die Arbeitsweise natürlichsprachig angezeigt. So wird in der Strategie "hohe Druschqualität" angezeigt, dass bei einem Wechsel auf "maximaler Durchsatz" die Sauberkeit des Korns verschlechtert werden kann. Weiterhin wird nach Durchführung von Änderungen der Strategie deren Auswirkung angezeigt.

### Aufgabe

Im Stand der Technik nach EP 0 928 554 A1 besteht daher die Möglichkeit, einen zu optimierenden Ergebnisparameter (Durchsatz und/oder Verluste) des Arbeitsergebnisses für einen durchzuführenden Arbeitsvorgang auszuwählen. Das Bedienerassistenzsystem gibt dann den einzustellenden Betriebsparameter (Dreschwerk- und Reinigungseinstellung) aus, zeigt dem Bediener jedoch nicht an, welcher Ergebnisparameter tatsächlich erreicht wird. Der unerfahrene Bediener steht hier vor der Schwierigkeit, den zu optimierenden Ergebnisparameter auszuwählen.

Die Bedienerassistenzsysteme nach EP 2 042 019 A2 und EP 0 586 999 A2 überlassen es dem Bediener, unterschiedliche Einstellungen des Betriebsparameters einzugeben und zeigen eine erwartete Tendenz bzw. ein zu erwartendes Ergebnis an. Die Optimierung des Betriebsparameters erfolgt in diesen Bedienerassistenzsystemen somit nicht selbsttätig durch das Bedienerassistenzsystem, sondern durch den Bediener, der mehrere Einstellungen ausprobieren muss, um die optimale Einstellung zu finden, was nicht immer zu optimalen Einstellungen führen wird.

Das Bedienerassistenzsystem nach MDA 120 ermöglicht es lediglich, den Wert des zu erreichenden Ergebnisparameters (Verlust oder Arbeitsgeschwindigkeit) einzugeben und gibt die einzustellen Betriebsparameter des Mähdreschers aus. Hier muss der Bediener somit den Wert des optimalen Ergebnisparameters selbst eingeben, was unerfahrene Bediener überfordert.

Die EP 2 132 974 A1 kennt nur einen einzigen Ergebnisparameter, nämlich die Verdichtbarkeit des Erntegutes. Es sind jedoch viele Ernteaufgaben denkbar, bei denen es vorteilhaft wäre, andere Ergebnisparameter zu optimieren.

Bei der DE 10 2013 106 131 A1 wird nur eine erwartete Tendenz angezeigt, die eine geänderte Prozessoptimierungsstrategie auf das Arbeitsergebnis hat, was den Bediener die Auswahl der Prozessoptimierungsstrategie nicht erleichtert. Die korrekte Anzeige der Auswirkung erfolgt erst nach dem Wechsel der Prozessoptimierungsstrategie.

Die vorliegende Erfindung hat sich zur Aufgabe gesetzt, ein gegenüber dem Stand der Technik weiterentwickeltes Bedienerassistenzsystem für einen Feldhäcksler zu entwickeln, bei dem die erwähnten Nachteile nicht oder in einem verminderten Maße auftreten.

### Erfindung

Die vorliegende Erfindung wird durch die Patentansprüche definiert.

Ein Bedienerassistenzsystem für eine landwirtschaftliche Arbeitsmaschine, die wenigstens einen veränderbaren Betriebsparameter aufweist, der mehrere, unterschiedliche Ergebnisparameter des Arbeitsergebnisses der Arbeitsmaschine beeinflusst, ist mit einer Eingabeeinrichtung, einem mit der Eingabeeinrichtung verbundenen Prozessor und einer mit dem Prozessor verbundenen Anzeigeeinrichtung ausgestattet. Der Prozessor ist programmiert, über die Eingabeeinrichtung eine Eingabe eines auswählbaren, zu optimierenden Ergebnisparameters des Arbeitsergebnisses für einen durchzuführenden Arbeitsvorgang zu erhalten, basierend auf der Eingabe einen optimierten Betriebsparameter zu berechnen und auf der Anzeigeeinrichtung einen dem optimierten Betriebsparameter zugehörigen, erwarteten Wert für das Arbeitsergebnis der Arbeitsmaschine für den Arbeitsvorgang auszugeben.

Mit anderen Worten kann der Bediener mit der Eingabeeinrichtung auswählen, welcher Ergebnisparameter aus mehreren, unterschiedlichen Ergebnisparametern des Arbeitsergebnisses der landwirtschaftlichen Arbeitsmaschine für einen durchzuführenden Arbeitsvorgang optimiert werden soll. Der Prozessor des Bedienerassistenzsystems berechnet dann, abhängig vom ausgewählten Ergebnisparameter, einen optimierten Betriebsparameter und einen dem optimierten Betriebsparameter zugehörigen, erwarteten Wert für das Arbeitsergebnis der Arbeitsmaschine für den Arbeitsvorgang und zeigt diesen Wert auf der Anzeigeeinrichtung an.

Auf diese Weise wird dem Bediener die Möglichkeit gegeben, vor Arbeitsbeginn oder bei der Arbeit unterschiedliche Ergebnisparameter virtuell optimieren zu lassen und sich die zugehörigen, zu erwartenden Werte für das Arbeitsergebnis der Arbeitsmaschine für den Arbeitsvorgang auf der Anzeigeeinrichtung anzeigen zu lassen. Der Bediener kann somit erkennen, welche Optimierungsart welche Auswirkungen auf den Wert für das Arbeitsergebnis hat. Dadurch kann auch ein ungeübter Bediener auf einfache Weise die geeignetste Optimierungsart für den Arbeitsvorgang auswählen und zu einem optimalen Betriebsparameter der Arbeitsmaschine kommen. Dieser Betriebsparameter kann schließlich durch den Bediener oder direkt durch das Bedienerassistenzsystem tatsächlich an der Arbeitsmaschine eingestellt werden.

Insbesondere kann die Eingabeeinrichtung eine Eingabe eines oder mehrerer oder aller folgender Ergebnisparameter ermöglichen: (a) maximale Effizienz des Arbeitsvorganges, (b) maximale Produktivität des Arbeitsvorganges und (c) maximale Qualität des Arbeitsergebnisses. Bei der Qualität des Arbeitsergebnisses kann noch eine Eingabemöglichkeit durch den Bediener vorgesehen sein, um detaillierter zu definieren, wie eine optimale Qualität aussehen soll. Bei einem Feldhäcksler mit einer Erntegutnachbearbeitungseinrichtung (Körnerprozessor) kann beispielsweise eingegeben werden, ob die Körner nur angeschlagen oder zermahlen werden sollen.

Auf der Anzeigeeinrichtung können einer oder mehrerer oder aller der folgenden Werte für das Arbeitsergebnis der Arbeitsmaschine für den Arbeitsvorgang anzeigbar sein: Durchsatz geernteten Ernteguts, Kraftstoffverbrauch, Arbeitszeit und ein Maß für die Qualität geernteten Ernteguts.

Vorzugsweise ermöglicht die Eingabeeinrichtung eine Auswahl einer relativen Wichtung der möglichen Ergebnisparameter. Dabei kann der Prozessor programmiert sein, bei einem ausgewählten, mehrere der möglichen Ergebnisparameter in einem gewichteten Maß umfassenden Ergebnisparameter den Betriebsparameter abhängig von der relativen Wichtung der jeweiligen Ergebnisparameter zu berechnen, indem er umso größere Abweichungen von einem sich bei einer reinen Auswahl eines einzigen Ergebnisparameters ergebenden Betriebsparameters erlaubt, je geringer die Wichtung des jeweiligen Ergebnisparameters ist.

Der Prozessor ist insbesondere programmiert, auf der Anzeigeeinrichtung eine graphische Darstellung wiederzugeben, in der unterschiedliche Ergebnisparameter definierten Punkten eines geometrischen Körpers (im Falle von drei auswählbaren Ergebnisparametern beispielsweise Ecken eines Dreiecks) zugeordnet sind und ein zur Auswahl des Ergebnisparameters dienender Cursor mit der Eingabeeinrichtung über den geometrischen Körper bewegbar ist. Der Cursor kann über separate Elemente der Eingabeeinrichtung, z.B. Tasten oder eine Maus oder eine Kugel, bewegt werden, oder die Anzeigeeinrichtung wird berührungssensitiv ausgeführt und dient dann gleichzeitig als Eingabeeinrichtung.

Die Arbeitsmaschine ist insbesondere ein Feldhäcksler, der einen Verbrennungsmotor, einen mit dem Verbrennungsmotor in Antriebsverbindung stehenden Erntevorsatz, eine stromab der Erntegutaufnahmeeinrichtung angeordnete, mit dem Verbrennungsmotor in Antriebsverbindung stehende Erntegutfördereinrichtung mit Vorpresswalzen, eine stromab der Erntegutfördereinrichtung angeordnete, mit dem Verbrennungsmotor in Antriebsverbindung stehende Häckseleinrichtung, eine stromab der Häckseleinrichtung angeordnete, mit dem Verbrennungsmotor in Antriebsverbindung stehende Erntegutnachbearbeitungseinrichtung und eine stromab der Erntegutnachbearbeitungseinrichtung angeordnete Überladeeinrichtung für gehäckseltes Erntegut aufweist. Der Prozessor ist in diesem Fall programmiert, einen oder mehrere oder alle der folgenden Betriebsparameter zu optimieren: die Drehzahl des Verbrennungsmotors, die Vortriebsgeschwindigkeit des Feldhäckslers, die Schnittlänge des Ernteguts und ein (das Aufschließen - "anknacksen" - der Körner im Erntegut beeinflussender) Einwirkungsgrad der Erntegutnachbearbeitungseinrichtung.

Der Prozessor kann mit Informationen hinsichtlich einer oder mehrerer oder aller folgender Größen beaufschlagbar und programmiert sein, die Größen bei der Optimierung des Betriebsparameters und des erwarteten Wertes für das Arbeitsergebnis zu berücksichtigen: Feuchtegehalt von aufzunehmenden Erntegut, Bestandsdichte eines abzuerntenden Felds mit Erntegut, Art der Pflanzen des abzuerntenden Feldes, Verwendungsart des Ernteguts, Art eines Erntevorsatzes, Anzahl von Messern einer Häckseltrommel, Schnitthöhe des Erntevorsatzes, eine vorgebbare untere und/oder obere Grenze der Schnittlänge, Wetterhistorie und beliebige Arten theoretischer oder auf Erfahrungswerten beruhender, linearer oder nicht linearer Zusammenhänge zwischen den erwähnten Größen und dem resultierenden Betriebsparameter und/oder des erwarteten Wertes für das Arbeitsergebnis.

Das Bedienerassistenzsystem kann physisch auf einem tragbaren, von der Arbeitsmaschine trennbaren und mit einem Bussystem der Arbeitsmaschine verbindbaren Handgerät realisiert sein. Es ist aber auch denkbar, das Bedienerassistenzsystem als Bordcomputer der Arbeitsmaschine auszuführen.

### Ausführungsbeispiel

In den Zeichnungen ist ein nachfolgend näher beschriebenes Ausführungsbeispiel der Erfindung dargestellt, wobei die Bezugszeichen nicht zu einer einschränkenden Auslegung der Patentansprüche herangezogen werden dürfen. Es zeigt:
- Fig. 1: eine schematische seitliche Ansicht einer Arbeitsmaschine in Form eines selbstfahrenden Feldhäckslers,
- Fig. 2: eine schematische Darstellung eines Bedienerassistenzsystems und seiner Anbindung an ein Kommunikationssystem der Arbeitsmaschine,
- Fig. 3: ein Flussdiagramm, nach dem das Bedienerassistenzsystem bei der Abarbeitung eines Arbeitsauftrags vorgeht,
- Fig. 4: ein Flussdiagramm, nach dem das Bedienerassistenzsystem beim Feldbetrieb vorgeht, und
- Fig. 5: ein Beispiel für ein von der Anzeigeeinrichtung des Bedienerassistenzsystems während der Optimierung der Betriebsparameter der Arbeitsmaschine angezeigtes Bild.

### Arbeitsmaschine

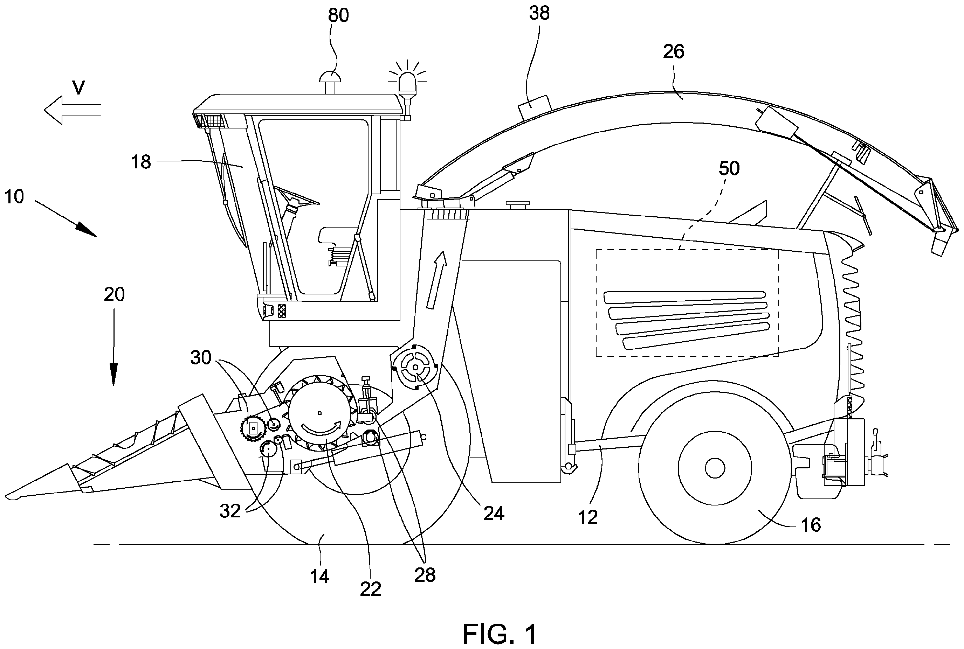

In der Figur 1 ist eine selbstfahrende landwirtschaftliche Arbeitsmaschine 10 in der Art eines selbstfahrenden Feldhäckslers in schematischer Seitenansicht dargestellt. Die Arbeitsmaschine 10 baut sich auf einem Rahmen 12 auf, der von vorderen angetriebenen Rädern 14 und lenkbaren rückwärtigen Rädern 16 getragen wird. Die Bedienung der Arbeitsmaschine 10 erfolgt von einer Fahrerkabine 18 aus, von der aus ein Erntevorsatz 20 in Form eines Mähvorsatzes für Maispflanzen einsehbar ist. Mittels des Erntevorsatzes 20 vom Boden aufgenommenes Erntegut, z. B. Mais oder dergleichen wird über einen Einzugsförderer mit Vorpresswalzen 30, 32, die innerhalb eines Einzugsgehäuses an der Frontseite der Arbeitsmaschine 10 angeordnet sind, einer unterhalb der Fahrerkabine 18 angeordneten Häckseleinrichtung 22 in Form einer Häckseltrommel zugeführt, die es in kleine Stücke häckselt und es nach dem Durchlauf einer Erntegutnachbearbeitungseinrichtung 28 mit zusammenarbeitenden Prozessorwalzen einer Fördervorrichtung 24 aufgibt. Das Gut verlässt die Erntemaschine 10 zu einem nebenher fahrenden Transportfahrzeug über eine um eine etwa vertikale Achse drehbare und in der Neigung verstellbare Überladeeinrichtung 26. An der Überladeeinrichtung 26 ist ein Sensor 38 zur Erfassung von Ernteguteigenschaften 38, insbesondere der Erntegutfeuchte, angebracht.

Ein Verbrennungsmotor 50 treibt über einen mechanischen Antriebsstrang die Häckseleinrichtung 22, die Erntegutnachbearbeitungseinrichtung 28 und die Fördervorrichtung 24 an. Außerdem treibt er nicht gezeigte Hydropumpen an, die wiederum Hydraulikmotoren 52, 54 zum Antrieb des Erntevorsatzes 20 und der Vorpresswalzen 30, 32 versorgen. Hierzu sei auf die Offenbarung der DE 10 2009 003 242 A1 verwiesen.

Im Folgenden beziehen sich Richtungsangaben, wie vorn, hinten, seitlich, unten und oben, auf die Vorwärtsrichtung V der Arbeitsmaschine 10, die in der Figur 1 nach links verläuft.

### Bussystem der Arbeitsmaschine und Bedienerassistenzsystem

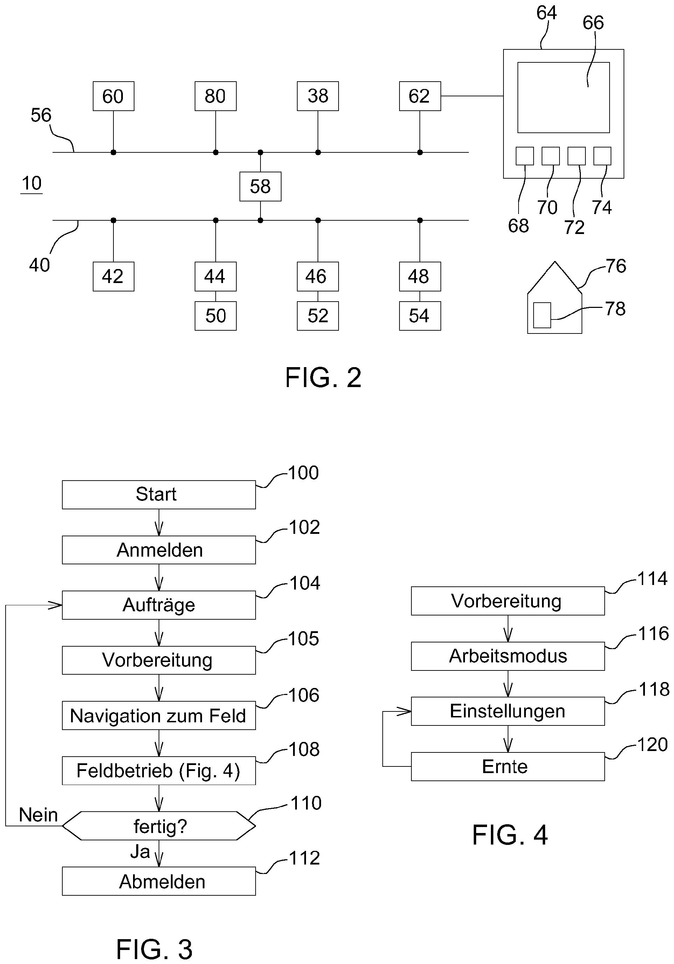

Es wird nun auf die Figur 2 Bezug genommen. Die Arbeitsmaschine 10 umfasst einen ersten (Maschinen-) Bus 40, der zur Übertragung von für die Kontrolle der Arbeitsmaschine 10 relevanten Parametern dient und beispielsweise als CAN-Bus ausgeführt sein kann. An diesem Bussystem ist eine Steuereinheit 42, die zur Steuerung von Kontrolleinheiten 44, 46, 48 dient, angeschlossen. Die Kontrolleinheit 44 steuert beispielsweise Betriebsdaten des zum Antrieb der Arbeitsmaschine 10 dienenden Verbrennungsmotors 50, wie die Kraftstoffzufuhr, und somit die Drehzahl des Verbrennungsmotors 50. Die Kontrolleinheit 46 steuert Betriebsdaten eines Hydraulikmotors 52, der zum Antrieb des Erntevorsatzes 20 dient, während die Kontrolleinheit 48 Betriebsdaten eines Hydraulikmotors 54 steuert, der zum Antrieb der Vorpresswalzen 30, 32 dient. Die Steuereinheit 42 kontrolliert demnach u.a. die Drehzahlen des Verbrennungsmotors 50 und der Hydraulikmotoren 52 und 54.

Die Arbeitsmaschine 10 umfasst weiterhin einen zweiten (Kommunikations-) Bus 56, der insbesondere unter der Norm ISO 11783 arbeitet. Er dient u.a. zur Übertragung von Positions- und Erntegutdaten, denn an ihn sind der Sensor 38, ein Positionsbestimmungssystem 80 zur Erfassung von Signalen von Satelliten eines Navigationssystems (GPS, Galileo oder Glonass) und ein virtuelles Terminal 60 angeschlossen. Eine erste Kommunikationsschnittstelle 58 verbindet den zweiten Bus 56 mit dem ersten Bus 40. Eine zweite Kommunikationsschnittstelle 62 verbindet den zweiten Bus 56 mit einem als separates, tragbares Gerät ausgeführten Bedienerassistenzsystem 64, das als sogenannter Tablet-Computer oder Smartphone ausgeführt sein kann und einen Prozessor 68, eine Speichereinrichtung 70, in der Programme und Daten für den Prozessor 68 abgespeichert sind, eine Anzeigeeinrichtung 66, eine Eingabeeinrichtung 72 und eine drahtlose, dritte Kommunikationsschnittstelle 74 umfasst, die zur drahtlosen Kommunikation mit einem an einer beabstandeten Stelle 76 angeordneten Rechner 78 dient. Die dritte Kommunikationsschnittstelle 74 kann nach einem beliebigen Protokoll arbeiten, insbesondere für Mobiltelefonie (z.B. GSM) oder Datenübertragung (z.B. UMTS oder LTE oder WLAN) und zwischengeschaltete Relaisstationen nutzen, um eine insbesondere internetprotokollbasierte Kommunikation mit dem Rechner 78 durchzuführen. Die zweite Kommunikationsschnittstelle 62 kann mit dem Bedienerassistenzsystem 64 über ein drahtgebundenes Protokoll (z.B. Ethernet) über eine Leitung oder drahtlos (z.B. WLAN oder Bluetooth) zusammenwirken. Das Bedienerassistenzsystem 64 kann in einer Halterung in der Kabine 18 angeordnet sein, die als Docking-Station dient und das Bedienerassistenzsystem 64 mit Strom versorgt und mit der zweiten Kommunikationsschnittstelle 62 verbindet.

### Arbeitsweise des Bedienerassistenzsystems

Die Figur 3 zeigt ein Flussdiagramm, nach dem der Prozessor 68 des Bedienerassistenzsystems 64 vorgeht, wenn letzteres bei der Abarbeitung von Ernteaufträgen eingesetzt wird. Nach dem Start im Schritt 100 kann sich ein Bediener im Schritt 102 beim Bedienerassistenzsystem 64 anmelden, insbesondere nach Eingabe einer Identitätsreferenz und eines Passworts. Im folgenden Schritt 104 kann sich der Bediener die für den jeweiligen Tag (und ggf. folgende Tage) anstehenden Aufträge auf der Anzeigeeinrichtung 66 anzeigen lassen, die das Bedienerassistenzsystem 64 über die dritte Kommunikationsschnittstelle 74 vom Rechner 78 erhält. Der Rechner 78 kann beispielsweise im Büro eines Lohnunternehmers stehen und von diesem mit den Aufträgen beaufschlagt werden, oder die Aufträge werden von Auftraggebern (z.B. Landwirten) in ein internetbasiertes System eingestellt, das auf dem Rechner 78 läuft.

Wenn der Bediener nun einen Auftrag durchführen will, veranlasst er das Bedienerassistenzsystem 64 durch eine geeignete Eingabe in die Eingabeeinrichtung 72, zum Schritt 105 überzugehen. Hierbei werden Vorbereitungen für die Ernte getroffen, z.B. die Arbeitsmaschine aufgetankt, ggf. gereinigt und ein für den Auftrag geeigneter Erntevorsatz 20 angekoppelt. Es können auch Schleifvorgänge zum Schärfen der Häckselmesser der Häckseleinrichtung 22 und/oder ein Einstellen des Gegenschneidenabstandes erfolgen. Hierzu können auf der Anzeigeeinrichtung 66 entsprechende Hinweise an den Bediener gegeben werden, der die erforderlichen Schritte dann selbst durchführt, obwohl jene Schritte, die keine manuelle Einwirkung des Bedieners benötigen, wie der Schleifvorgang oder die Gegenschneideneinstellung, auch durch das Bedienerassistenzsystem 64 veranlasst werden können, das dann die Kontrolleinheit 42 entsprechend aktiviert.

Im nachfolgenden Schritt 106 wird der Bediener zum abzuerntenden Feld navigiert, indem beispielsweise eine Karte auf der Anzeigeeinrichtung 66 angezeigt wird, gemäß welcher der Bediener die Arbeitsmaschine 10 zum Feld fährt. Die Positionsdaten können dabei über die zweite Kommunikationsschnittstelle 62 vom Positionsbestimmungssystem 80 bereitgestellt werden oder von einem internen Positionsbestimmungssystem des Bedienerassistenzsystems 64.

Nach der Ankunft am Feld kann der Bediener das Bedienerassistenzsystem 64 durch eine geeignete Eingabe in die Bedienereingabeeinrichtung 72 veranlassen, zum Schritt 108 überzugehen, d.h. den Feldbetrieb aufzunehmen. Dieser Schritt 108 wird anhand der Figur 4 weiter unten erläutert. Nach Ende des Feldbetriebs (Schritt 108) folgt der Schritt 110, in dem der Bediener eingeben kann, dass seine Aufträge für den Tag beendet sind, worauf hin die Abmeldung im Schritt 112 folgt. Anderenfalls folgt wieder der Schritt 104.

In den Schritten 102, 104, 105, 106, 108, 110 und 112 werden dem Bediener jeweils unterschiedliche Inhalte auf der Anzeigeeinrichtung 66 angezeigt, die dem jeweiligen Schritt entsprechen.

### Feldbetrieb

Der Schritt 108 wird nun anhand der Figur 4 detailliert beschrieben. Es wird zunächst der Schritt 114 durchgeführt, in dem Vorbereitungen für die Erntearbeit durchgeführt werden. Dabei kann das Bedienerassistenzsystem 64 notwendige Maßnahmen, die der Bediener durchführen soll, auf der Anzeigeeinrichtung 66 anzeigen. Außerdem sind Transportschutzvorrichtungen vom Erntevorsatz 20 abzunehmen und der (mehrteilige) Erntevorsatz 20 in eine Ernteposition zu verschwenken.

Im Schritt 116 wird dann ein Arbeitsmodus der Arbeitsmaschine ausgewählt. Auf entsprechende Anweisungen auf der Anzeigeeinrichtung 66 des Bedienerassistenzsystems 64 hin kann der Bediener dazu einen Sicherheitsschalter, der zum Umschalten zwischen Straßen- und Feldbetrieb dient, auf Feldbetrieb umschalten und dann eine Kupplung im Antriebsstrang zwischen dem Verbrennungsmotor 50 einerseits und der Häckseleinrichtung 22, der Fördervorrichtung 24 und der Erntegutnachbearbeitungseinrichtung 28 andererseits schließen, um die Häckseleinrichtung 22 in Bewegung zu setzen. Die Arbeitsmaschine 10 ist nun erntebereit, denn auch die Hydromotoren 52, 54 drehen sich.

### Optimierung

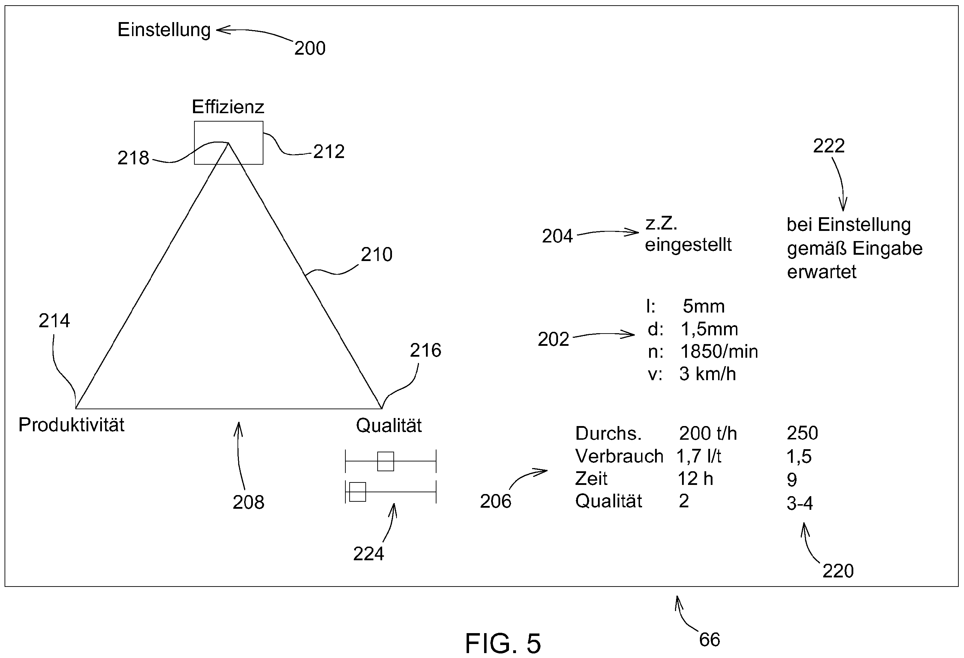

Im folgenden Schritt 118 werden einige Einstellungen der Arbeitsmaschine 10 festgelegt, um einen optimalen Betrieb zu ermöglichen. Der Schritt 118 könnte auch vor dem Schritt 114 oder 116 durchgeführt werden und kann auch während der im Schritt 120 folgenden Ernte wiederholt werden. Bei der Durchführung des Schritts 118 wird auf der Anzeigeeinrichtung 66 das in der Figur 5 dargestellte Bild angezeigt.

Die Anzeigeeinrichtung 66 zeigt an, dass gerade eine Einstellung der Arbeitsmaschine 10 optimiert werden soll (Feld 200). Außerdem werden in einem Feld 202 jeweils aktuell eingestellte Betriebsparameter der Arbeitsmaschine 10 angezeigt, nämlich die Schnittlänge I, die 5 mm beträgt, der Abstand d zwischen den Prozessorwalzen der Erntegutnachbearbeitungseinrichtung 28, der 1,5 mm beträgt, die Drehzahl des Verbrennungsmotors 50, die 1850/min beträgt und die vorgewählte Vortriebsgeschwindigkeit v, die 3 km/h beträgt. Ein darüber angeordneter Text 204 verdeutlicht, dass es sich um aktuell ausgewählte Einstellungen handelt.

In einem weiteren Feld 206 werden bei den aktuell gewählten Einstellungen erwartete Werte für das Arbeitsergebnis der Arbeitsmaschine 10 für den Arbeitsvorgang angezeigt. Hier werden der Durchsatz, der 200 t/h beträgt, der Kraftstoffverbrauch von 1,7 l/t Erntegut, die zu erwartende Erntezeit von 12 Stunden und eine Einstufung der Qualität des Ernteguts, die hier als Schulnote von 2 angezeigt wird, dargestellt.

In einem weiteren Feld 208 wird ein geometrischer Körper 210 in Form eines Dreiecks angezeigt, bei dem definierten Punkten, bei denen es sich hier um die Ecken handelt, unterschiedliche optimierbare Ergebnisparameter des Arbeitsprozesses zugeordnet sind. Einer (linken, unteren) Ecke 214 des Körpers 210 ist die Produktivität zugeordnet, einer (rechten, unteren) Ecke 216 des Körpers 210 die Qualität und einer (mittleren, oberen) Ecke 218 die Effizienz. Ein Cursor 212 kann mittels der Eingabeeinrichtung 72, die auch als berührungsempfindliche Anzeigeeinrichtung 66 ausgeführt sein kann, über den Körper 210 bewegt werden. Befindet sich der Cursor 212 in der dargestellten Position, wird der Prozessor 68 die Effizienz des Arbeitsvorgangs optimieren, d.h. Betriebsparameter herausfinden, bei denen der Erntevorgang mit minimalem Kraftstoffverbrauch durchgeführt wird. Verbringt der Bediener den Cursor 212 in die der Produktivität zugeordnete Ecke 214, wird der Prozessor 68 die Produktivität des Arbeitsvorgangs optimieren, d.h. Betriebsparameter herausfinden, bei denen der Erntevorgang mit minimalem Zeitbedarf und größtmöglichem Durchsatz durchgeführt wird. Verbringt der Bediener den Cursor 212 in die der Qualität zugeordnete Ecke 216, wird der Prozessor 68 die Qualität des Arbeitsergebnisses optimieren, d.h. Betriebsparameter herausfinden, bei denen der Erntevorgang mit bestmöglichem Ergebnis der Erntequalität durchgeführt wird. Der Cursor 212 kann auch in eine beliebige Zwischenstellung verbracht werden, z.B. in der Mitte des Dreiecks, bei dem ein Kompromiss aus den drei erwähnten Ergebnisparametern gesucht wird. Auch kann der Cursor 212 auf eine Stelle am Rand des Dreiecks gestellt werden, sodass dann ein Kompromiss aus zwei Ergebnisparameters ermittelt wird. Je näher der Cursor an einer der Ecken 214, 216, 218 steht, umso höher ist die Wichtung, mit welcher der zugehörige Ergebnisparameter in die Wahl der Betriebsparameter eingeht.

In einem weiteren Feld 220 wird auf der Anzeigeeinrichtung 66 angezeigt, welche Werte für das Arbeitsergebnis der Arbeitsmaschine 10 für den Arbeitsvorgang zu erwarten sind, falls die gemäß der aktuellen Stellung des Cursors berechneten Betriebsparameter eingestellt wären. In der Figur 5 werden der Durchsatz, der 250 t/h beträgt, ein Kraftstoffverbrauch von 1,5 l/t Erntegut, eine zu erwartende Erntezeit von 9 Stunden und eine Einstufung der Qualität des Ernteguts, die hier als Schulnote von 3-4 angezeigt wird, dargestellt. Es wäre denkbar, Veränderungen gegenüber den aktuellen Werten (Feld 206) durch die Farbe (grün für besser, rot für schlechter) und/oder Pfeile hervorzuheben. Außerdem könnte man rechts neben dem Feld 202 die anhand der Stellung des Cursors 212 berechneten Betriebsparameter anzeigen, worauf in der Figur 5 jedoch zugunsten der Übersichtlichkeit verzichtet wurde. Ein Feld 222 zeigt an, dass im Feld 220 die Werte gezeigt werden, die man erwartet, wenn die mit dem Cursor 212 ausgewählte Optimierungsart auswählt ist und zur Bestimmung der Betriebsparameter dient.

Der Bediener kann somit unterschiedliche Stellungen des Cursors 212 innerhalb des Körpers 210 ausprobieren und feststellen, in welcher Weise sich die gewählte Optimierung auf die Werte für das Arbeitsergebnis auswirkt. Er kann somit in sehr einfacher Weise feststellen, welche Stellung des Cursors 212 und somit welche Optimierung ihm an sinnvollsten erscheint. Er lernt auch die Zusammenhänge zwischen der Optimierungsart und den zu erwartenden Werten für das Arbeitsergebnis, sodass sich ein Lerneffekt für ungeübte und sogar für geübte Bediener und insbesondere am Anfang einer Erntesaison einstellt. Auch kann der Bediener ggf. eine von einem Auftraggeber vorgegebene Einstellung mit der einer optimierten Einstellung vergleichen und dem Auftraggeber vorschlagen, die Vorgabe bzw. Einstellung zu ändern. Dazu kann er das Bedienerassistenzsystem 64 vor Ort dem Auftraggeber zeigen oder den Inhalt der Anzeigeeinrichtung 66 über die dritte Kommunikationsschnittstelle 74 an den Auftraggeber übersenden. Es wäre im Übrigen auch denkbar, dass die zu verwendende Optimierung bereits mit dem Auftrag (vgl. Schritt 104) vorgegeben wird und nicht durch den Bediener geändert werden kann. In diesem Falle könnte ggf. nur ein Bediener mit entsprechender Berechtigung die vorgegebene Optimierung überschreiben.

Der Prozessor 68 gibt dann, insbesondere auf eine Bestätigungseingabe des Bedieners hin, die berechneten Betriebsparameter aus (Feld 202), damit der Bediener sie an der Arbeitsmaschine 10 einstellen kann, oder veranlasst über die zweite Kommunikationsschnittstelle 62 und die erste Kommunikationsschnittstelle 58, dass die Kontrolleinheit 42 die berechneten Betriebsparameter selbsttätig einstellt.

Der Schritt 118 kann während der Ernte wiederholt werden, sei es auf eine Bedienereingabe hin oder wenn der Prozessor 68 feststellt, dass einer oder mehrere der Werte des Arbeitsergebnisses (vgl. Feld 206) derzeit mehr als ein festlegbarer oder festgelegter Schwellenwert schlechter als ein bei geeigneterer Optimierung (d.h. Stellung des Cursors 212) erzielbarer Wert sein sollte. Der Bediener bekommt in diesem Fall einen entsprechenden Warnhinweis und es öffnet sich das Fenster gemäß Figur 5.

Der Prozessor 68 stützt sich bei den Berechnungen des Schritts 118, d.h. der Bestimmung anhand der Stellung des Cursors 212 optimierter Betriebsparameter und zugehöriger Werte für das Arbeitsergebnis auf eine Vielzahl von Daten. Anhand des Auftrags (Schritt 104) liegen ihm Informationen hinsichtlich der Lage des Feldes und des Erntegutbestandes (Pflanzenart, Bodenart, Wetterdaten der diesjährigen Wachstumsperiode, Best-in-Class-Informationen, Ertragsdaten und zugehörige Maschineneinstellungen bei vorherigen Ernten insbesondere einschließlich zugehöriger, historischer Wetterinformationen, Erfahrungsberichte, Expertenwissen) vor, die er vom Rechner 78 oder aus einer anderen, geeigneten Quelle, z.B. über das Internet erhalten kann. Somit sind die zu erwartenden Durchsätze und Erntegutfeuchten bereits bekannt, obwohl sie während der Ernte anhand des Sensor 38 (der als Nahinfrarotsensor ausgeführt sein kann, um die Erntegutfeuchte zu bestimmen) und eines Sensors (nicht gezeigt) zur Erfassung des Spaltes zwischen oberen und unteren Vorpresswalzen oder eines anderen, den Durchsatz erfassenden Sensors noch aktualisiert oder korrigiert werden können. Auch die Schnitthöhe des Erntevorsatzes 20 wird berücksichtigt, da sie den Durchsatz durch die Arbeitsmaschine 10 beeinflusst. Die Schnitthöhe kann durch den Auftrag (Schritt 104) vorgegeben oder durch den Bediener gesteuert sein oder wird anhand eines mit dem Sensor 38 erfassten Anteils an Verunreinigungen im Erntegut (z.B. an den Pflanzen haftende Bodenpartikel) erst während der Ernte festgelegt.

Bei der Bewertung der Qualität wird der Verwendungszweck des Ernteguts berücksichtigt, der im Auftrag (Schritt 104) bereits enthalten oder durch den Bediener eingegeben werden kann. So kann bei einer Verwendung als Futter für Tiere für die Qualität das Aufschließen von Körnern durch die Erntegutnachbearbeitungseinrichtung 28 besonders wichtig, um deren Energiegehalt auszunutzen. Bei einer Verwendung in einer Biogasanlage kann eher die Vermeidung von übergroßen Schnittlängen die Qualität beeinflussen. Die Wichtigkeit verschiedener Parameter für die Qualität könnte auch durch Schieberegler 224 auf der Anzeigeeinrichtung 66 angezeigt und mittels der Eingabeeinrichtung 72, die insbesondere als berührungsempfindliche Anzeigeeinrichtung 66 ausgeführt sein kann, eingestellt werden. So könnte der obere Schieberegler die Wichtigkeit des Aufschließens der Körner und der untere Schieberegler die Vermeidung übergroßer Schnittlängen repräsentieren.

Falls noch ein weiterer Ergebnisparameter des Arbeitsprozesses optimierbar sein sollte, wie z.B. die Geräuschentwicklung beim Erntevorgang, könnte der Körper 210 auch als Rechteck ausgeführt werden. Die vierte Ecke wird dann dem vierten Ergebnisparameter des Arbeitsprozesses zugeordnet.

Schließlich liegen dem Prozessor 68 auch Daten hinsichtlich der Art der Arbeitsmaschine 10, insbesondere hinsichtlich der - für die Kontrolle der Schnittlänge und für die Berechnung des Energiebedarfs der Häckseleinrichtung 22 benötigten - Zahl der um den Umfang der Häckseleinrichtung 22 verteilten Messer, der Art und der Breite des Erntevorsatzes 20 und vorzugsweise auch Details zu Kennlinien des Verbrennungsmotors 50 vor. Zudem kann eine obere und/oder eine untere Grenze der Schnittlänge vorgegeben werden.

Bei der Optimierung der Betriebsparameter in Abhängigkeit von dem ausgewählten, zu optimierenden Arbeitsergebnis verwendet der Prozessor 68 eine auf Erfahrungswerten, vorhergehenden oder gleichzeitig stattfindenden Versuchen und Erntevorgängen (die mit derselben Arbeitsmaschine 10 und/oder anderen Arbeitsmaschinen, sowie mit dem derzeitigen Bediener und/oder anderen Bedienern durchgeführt wurden) und Expertenwissen basierende Datenbasis. Es wird jeweils berücksichtigt, welchen Energiebedarf die Häckseleinrichtung 22, die Vorpresswalzen 30, 32, der (ggf. mit einer von der Vortriebsgeschwindigkeit V und/oder der Schnittlänge und/oder dem Durchsatz abhängigen Geschwindigkeit angetriebene) Erntevorsatz 20 und die Erntegutnachbearbeitungseinrichtung 28 haben und dennoch angestrebt, brauchbare Werte für die Qualität zu erreichen, auch wenn eine Optimierung der Effizienz und/oder Produktivität ausgewählt wird. Auch wird der Einfluss der Schnittlänge auf die Körner berücksichtigt, denn bei kürzeren Schnittlängen sind mehr Körner bereits angeschnitten (und müssen daher nicht durch die Erntegutnachbearbeitungseinrichtung 28 aufgeschlossen werden) als bei größeren Schnittlängen.

Falls eine reine Optimierung der Effizienz ausgewählt wird, wird der Prozessor 68 einen möglichst verbrauchsgünstigen Arbeitspunkt des Verbrennungsmotors 50 auf dessen Kennlinie ansteuern und die verbleibenden Betriebsparameter daraus ableiten, unter Einhaltung einer akzeptablen Qualität. Analog wird der Prozessor 68, wenn eine reine Optimierung der Produktivität ausgewählt wird, den Arbeitspunkt des Verbrennungsmotors 50 auf maximale Leistung setzen und die verbleibenden Betriebsparameter daraus ableiten, unter Einhaltung einer akzeptablen Qualität. Bei einer Optimierung der Qualität wird der Prozessor 68 vorrangig die Schnittlänge und die Erntegutbearbeitungseinrichtung 28 optimieren und daraus die anderen Betriebsparameter ableiten. Wenn nun ein einen oder mehrere der möglichen Ergebnisparameter in einem gewichteten Maß umfassenden Ergebnisparameter ausgewählt wird, d.h. der Cursor 212 an eine Stelle des Körpers 210 gestellt wird, die nicht einer der Ecken entspricht, wird der Prozessor 68 die Betriebsparameter abhängig von der relativen Wichtung der jeweiligen Ergebnisparameter berechnen, indem er umso größere Abweichungen von einem sich bei einer reinen Auswahl eines einzigen Ergebnisparameters ergebenden Betriebsparameters erlaubt, je geringer die Wichtung des jeweiligen Ergebnisparameters ist.

Es ist noch anzumerken, dass in der Darstellung nach Figur 5 einige oder alle Texte durch Symbole ersetzt werden könnten.

Im auf den Schritt 118 folgenden Schritt 120 wird dann der eigentliche Erntevorgang durchgeführt.

## Patentansprüche

1. Bedienerassistenzsystem (64) für eine landwirtschaftliche Arbeitsmaschine (10), die wenigstens einen veränderbaren Betriebsparameter aufweist, der mehrere, unterschiedliche Ergebnisparameter des Arbeitsergebnisses der Arbeitsmaschine (10) beeinflusst, wobei:
das Bedienerassistenzsystem (64) mit einer Eingabeeinrichtung (72), einem mit der Eingabeeinrichtung (72) verbundenen Prozessor (68) und einer mit dem Prozessor (68) verbundenen Anzeigeeinrichtung (66) ausgestattet ist und
der Prozessor (68) programmiert ist, über die Eingabeeinrichtung (72) eine Eingabe eines zu optimierenden Ergebnisparameters des Arbeitsergebnisses für einen durchzuführenden Arbeitsvorgang zu erhalten und basierend auf der Eingabe einen optimierten Betriebsparameter zu berechnen, wobei der zu optimierende Ergebnisparameter aus mehreren, unterschiedlichen Ergebnisparametern auswählbar ist,
**dadurch gekennzeichnet, dass** der Prozessor (68) programmiert ist, wenigstens einen im Falle der Einstellung des berechneten, optimierten Betriebsparameters der Arbeitsmaschine (10) zu erwartenden Wert für das Arbeitsergebnis der Arbeitsmaschine (10) für den Arbeitsvorgang zu berechnen und auf der Anzeigeeinrichtung (66) auszugeben.

2. Bedienerassistenzsystem (64) nach Anspruch 1, wobei die Eingabeeinrichtung (72) eine Eingabe eines oder mehrerer oder aller folgender Ergebnisparameter als auswählbaren, zu optimierenden Ergebnisparameter ermöglicht: (a) minimaler Kraftstoffverbrauch eines Erntevorgangs, (b) minimaler Zeitbedarf und größtmöglicher Durchsatz eines Erntevorgangs und (c) bestmögliches Ergebnis der Erntequalität eines Erntevorgangs.

3. Bedienerassistenzsystem (64) nach Anspruch 1 oder 2, wobei auf der Anzeigeeinrichtung (66) einer oder mehrerer oder aller der folgenden Werte für das Arbeitsergebnis der Arbeitsmaschine (10) für den Arbeitsvorgang anzeigbar sind: Durchsatz geernteten Ernteguts, Kraftstoffverbrauch, Arbeitszeit und ein Maß für die Qualität geernteten Ernteguts.

4. Bedienerassistenzsystem (64) nach einem der Ansprüche 1 bis 3, wobei die Eingabeeinrichtung (72) eine Auswahl einer relativen Wichtung der möglichen Ergebnisparameter ermöglicht.

5. Bedienerassistenzsystem (64) nach Anspruch 4, wobei der Prozessor (68) programmiert ist, bei einem ausgewählten, mehrere der möglichen Ergebnisparameter in einem gewichteten Maß umfassenden Ergebnisparameter den Betriebsparameter abhängig von der relativen Wichtung der jeweiligen Ergebnisparameter zu berechnen, indem er umso größere Abweichungen von einem sich bei einer reinen Auswahl eines einzigen Ergebnisparameters ergebenden Betriebsparameters erlaubt, je geringer die Wichtung des jeweiligen Ergebnisparameters ist.

6. Bedienerassistenzsystem (64) nach einem der vorhergehenden Ansprüche, wobei der Prozessor (68) programmiert ist, auf der Anzeigeeinrichtung (66) eine graphische Darstellung wiederzugeben, in der unterschiedliche Ergebnisparameter definierten Punkten (214, 216, 218) eines geometrischen Körpers (210) zugeordnet sind und ein zur Auswahl des Ergebnisparameters dienender Cursor (212) mit der Eingabeeinrichtung (72) über den geometrischen Körper (210) bewegbar ist.

7. Bedienerassistenzsystem (64) nach einem der vorhergehenden Ansprüche, wobei die Arbeitsmaschine (10) ein Feldhäcksler ist, der einen Verbrennungsmotor (50), einen mit dem Verbrennungsmotor (50) in Antriebsverbindung stehenden Erntevorsatz (20), eine stromab der Erntegutaufnahmeeinrichtung (20) angeordnete, mit dem Verbrennungsmotor in Antriebsverbindung stehende Erntegutfördereinrichtung mit Vorpresswalzen (30, 32), eine stromab der Erntegutfördereinrichtung (30, 32) angeordnete, mit dem Verbrennungsmotor (50) in Antriebsverbindung stehende Häckseleinrichtung (22), eine stromab der Häckseleinrichtung (22) angeordnete, mit dem Verbrennungsmotor (50) in Antriebsverbindung stehende Erntegutnachbearbeitungseinrichtung (28) und eine stromab der Erntegutnachbearbeitungseinrichtung (28) angeordnete Überladeeinrichtung (26) für gehäckseltes Erntegut aufweist, und wobei der Prozessor (68) programmiert ist, einen oder mehrere oder alle der folgenden Betriebsparameter zu optimieren: die Drehzahl des Verbrennungsmotors (50), die Vortriebsgeschwindigkeit der Arbeitsmaschine (10), die Schnittlänge des Ernteguts und ein Einwirkungsgrad der Erntegutnachbearbeitungseinrichtung (28).

8. Bedienerassistenzsystem (64) nach einem der vorhergehenden Ansprüche, wobei der Prozessor (68) mit Informationen hinsichtlich einer oder mehrerer oder aller folgender Größen beaufschlagbar und programmiert ist, die Größen bei der Optimierung des Betriebsparameters und des erwarteten Wertes für das Arbeitsergebnis zu berücksichtigen: Feuchtegehalt von aufzunehmenden Erntegut, Bestandsdichte eines abzuerntenden Felds mit Erntegut, Art der Pflanzen des abzuerntenden Feldes, beabsichtigte Verwendung des Ernteguts, Art eines Erntevorsatzes (20), Schnitthöhe des Erntevorsatzes (20), Anzahl von Messern einer Häckseltrommel (22), eine vorgebbare untere und/oder obere Grenze der Schnittlänge, Wetterhistorie und beliebige Arten theoretischer oder auf Erfahrungswerten beruhender, linearer oder nicht linearer Zusammenhänge zwischen den erwähnten Größen und dem resultierenden Betriebsparameter und/oder des erwarteten Wertes für das Arbeitsergebnis, wie Erfahrungsberichte, Expertenwissen oder Best-in-Class-Information.

9. Bedienerassistenzsystem (64) nach einem der vorhergehenden Ansprüche, **dadurch gekennzeichnet, dass** es physisch auf einem tragbaren, von der Arbeitsmaschine (10) trennbaren und mit einem Bussystem der Arbeitsmaschine (10) verbindbaren Handgerät realisiert ist.

10. Landwirtschaftliche Arbeitsmaschine (10), insbesondere Feldhäcksler, mit einem Bedienerassistenzsystem (64) nach einem der vorhergehenden Ansprüche.

## Claims

1. Operator assistance system (64) for an agricultural machine (10) which has at least one variable operating parameter which influences a plurality of different result parameters of the working result of the machine (10), wherein:
the operator assistance system (64) is equipped with an input device (72), a processor (68) connected to the input device (72) and a display device (66) connected to the processor (68), and
the processor (68) is programmed to receive, via the input device (72) an input of a result parameter, to be optimized, of the working result for an operation to be carried out and to calculate an optimized operating parameter on the basis of the input, wherein the result parameter to be optimized can be selected from a plurality of different result parameters,
**characterized in that** the processor (68) is programmed to calculate at least one value, which is to be expected in the case of the adjustment of the calculated optimized operating parameter of the machine (10), for the working result of the machine (10) for the operation, and to output said value on the display device (66).

2. Operator assistance system (64) according to Claim 1, wherein the input device (72) permits an input of one or more or of all of the following result parameters as selectable result parameters to be optimized: (a) minimum fuel consumption of a harvesting process, (b) minimum time requirement and largest possible throughput rate of a harvesting process and (c) best possible result of the harvesting quality of a harvesting process.

3. Operator assistance system (64) according to Claim 1 or 2, wherein one or more or all of the following values for the working result of the machine (10) for the operation can be displayed on the display device (66): throughput rate of harvested crop, fuel consumption, working time and a measure of the quality of the harvested crop.

4. Operator assistance system (64) according to one of Claims 1 to 3, wherein the input device (72) permits a selection of a relative weighting of the possible result parameters.

5. Operator assistance system (64) according to Claim 4, wherein the processor (68) is programmed to calculate, for a selected result parameter which comprises a plurality of the possible result parameters in a weighted measure, the operating parameter as a function of the relative weighting of the respective result parameters, in that it permits greater deviations from an operating parameter which results in the case of a pure selection of a single result parameter, the smaller the weighting of the respective result parameter.

6. Operator assistance system (64) according to one of the preceding claims, wherein the processor (68) is programmed to display a graphic representation on the display device (66), in which representation different result parameters are assigned to defined points (214, 216, 218) of a geometric body (210), and a cursor (212) serving to select the result parameter can be moved over the geometric body (210) with the input device (72).

7. Operator assistance system (64) according to one of the preceding claims, wherein the machine (10) is a field chopper which has an internal combustion engine (50), a harvesting attachment (20) which has a drive connection to the internal combustion engine (50), a harvested crop feed device which is arranged downstream of the harvested crop collecting device (20), has a drive connection to the internal combustion engine and has pre-pressing rollers (30, 32), a chopper device (22) which is arranged downstream of the harvested crop feed device (30, 32) and has a drive connection to the internal combustion engine (50), a harvested crop post-processing device (28) which is arranged downstream of the chopper device (22) and has a drive connection to the internal combustion engine (50) and a transfer device (26), arranged downstream of the harvested crop post-processing device (28), for chopped harvested crop, and wherein the processor (68) is programmed to optimize one or more or all of the following operating parameters: the rotational speed of the internal combustion engine (50), the propulsion speed of the machine (10), the cutting length of the harvested crop and a degree of action of the harvested crop post-processing device (28).

8. Operator assistance system (64) according to one of the preceding claims, wherein the processor (68) is supplied with information relating to one or more or all of the following variables and is programmed to take into account the variables during the optimization of the operating parameter and of the expected value for the working result: moisture content of harvested material to be collected, crop density of a field which is to be harvested and has a crop, type of plants of the field to be harvested, intended use of the crop, type of harvesting attachment (20), cutting height of the harvesting attachment (20), number of blades of a chopper drum (22), a predefinable lower and/or upper limit of the cutting length, weather history and any types of linear or non-linear relationships, which are theoretical or based on empirical values between the aforementioned variables and the resulting operating parameter and/or the expected value for the working result, such as empirical reports, expert knowledge or best-in-class information.

9. Operator assistance system (64) according to one of the preceding claims, **characterized in that** said operator assistance system (64) is implemented physically on a portable hand-held device which can be disconnected from the machine (10) and connected to a bus system of the machine (10).

10. Agricultural machine (10), in particular field chopper, having an operator assistance system (64) according to one of the preceding claims.

## Revendications

1. Système d'assistance du conducteur (64) pour un engin (10) agricole qui présente au moins un paramètre de fonctionnement modifiable qui influence plusieurs différents paramètres de résultat du résultat de travail de l'engin (10) :
le système d'assistance du conducteur (64) étant équipé d'un système d'entrée (72), d'un processeur (68) raccordé au système d'entrée (72) et d'un système d'affichage (66) raccordé au processeur (68), et
le processeur (68) étant programmé pour obtenir, via le système d'entrée (72), une entrée d'un paramètre de résultat à optimiser du résultat de travail pour un processus de travail à exécuter et, sur la base de l'entrée, pour calculer un paramètre de fonctionnement optimisé, le paramètre de résultat à optimiser pouvant être sélectionné à partir de plusieurs différents paramètres de résultat,
**caractérisé en ce que** le processeur (68) est programmé pour calculer au moins une valeur du résultat de travail de l'engin (10) pour le processus de travail qui doit être attendue dans le cas du réglage du paramètre de fonctionnement optimisé calculé de l'engin (10) et pour la sortir sur le système d'affichage (66).

2. Système d'assistance du conducteur (64) selon la revendication 1, le système d'entrée (72) permettant une entrée d'un ou de plusieurs ou de tous les paramètres de résultat suivants en tant que paramètre de résultat à optimiser sélectionnable : (a) consommation de carburant minimale d'un processus de récolte, (b) temps nécessaire minimal et débit le plus grand possible d'un processus de récolte, et (c) résultat le meilleur possible de la qualité de récolte d'un processus de récolte.

3. Système d'assistance du conducteur (64) selon la revendication 1 ou 2, une valeur ou plusieurs ou toutes les valeurs suivantes du résultat de travail de l'engin (10) pour le processus de travail pouvant être affichée(s) sur le système d'affichage (66) : débit du produit de récolte de la récolte, consommation de carburant, temps de travail et mesure de la qualité du produit de récolte de la récolte.

4. Système d'assistance du conducteur (64) selon l'une des revendications 1 à 3, le système d'entrée (72) permettant une sélection d'une pondération relative des paramètres de résultat possibles.

5. Système d'assistance du conducteur (64) selon la revendication 4, le processeur (68) étant programmé pour, pour un paramètre de résultat sélectionné comprenant plusieurs des paramètres de résultat possibles dans une mesure pondérée, calculer le paramètre de fonctionnement en fonction de la pondération relative des paramètres de résultat respectifs par le fait qu'il autorise des divergences d'un paramètre de fonctionnement résultant d'une pure sélection d'un paramètre de résultat unique d'autant plus grandes que la pondération du paramètre de résultat respectif est faible.

6. Système d'assistance du conducteur (64) selon l'une des revendications précédentes, le processeur (68) étant programmé pour reproduire sur le système d'affichage (66) une représentation graphique dans laquelle différents paramètres de résultat sont affectés à des points (214, 216, 218) définis d'un corps géométrique (210), et un curseur (212) servant à la sélection du paramètre de résultat peut être déplacé avec le système d'entrée (72) sur le corps géométrique (210).

7. Système d'assistance du conducteur (64) selon l'une des revendications précédentes, l'engin (10) étant une hacheuse-chargeuse qui présente un moteur à combustion interne (50), une tête de récolte (20) qui est en liaison d'entraînement avec le moteur à combustion interne (50), un système de transport du produit de récolte avec des rouleaux de précompression (30, 32) qui est disposé en aval du système de ramassage du produit de récolte (20) et qui est en liaison d'entraînement avec le moteur à combustion interne, un système de hachage (22) qui est disposé en aval du système de transport du produit de récolte (30, 32) et qui est en liaison d'entraînement avec le moteur à combustion interne (50), un système de post-traitement du produit de récolte (28) qui est disposé en aval du système de post-traitement (22) et qui est en liaison d'entraînement avec le moteur à combustion interne (50), et un système de transbordement (26) du produit de récolte haché qui est disposé en aval du système de post-traitement du produit de récolte (28), et le processeur (68) étant programmé pour optimiser un ou plusieurs ou tous les paramètres de fonctionnement suivants : la vitesse de rotation du moteur à combustion interne (50), la vitesse d'avance de l'engin (10), la longueur de coupe du produit de récolte et un degré d'action du système de post-traitement du produit de récolte (28).

8. Système d'assistance du conducteur (64) selon l'une des revendications précédentes, le processeur (68) pouvant être alimenté avec une information concernant une ou plusieurs ou toutes les grandeurs suivantes et étant programmé pour prendre en considération les grandeurs lors de l'optimisation du paramètre de fonctionnement et de la valeur attendue pour le résultat de travail : teneur en humidité du produit de récolte à ramasser, densité en produit de récolte d'un champ à récolter, type de plantes du champ à récolter, utilisation prévue du produit de récolte, type de tête de récolte (20), hauteur de coupe de la tête de récolte (20), nombre de lames d'un tambour de hachage (22), une limite inférieure et/ou supérieure, pouvant être prédéfinie, de la longueur de coupe, historique météorologique et des types quelconques de relations théoriques ou reposant sur des valeurs empiriques, linéaires ou non linéaires, entre les grandeurs mentionnées et le paramètre de fonctionnement résultant et/ou de la valeur attendue pour le résultat de travail, comme des rapports d'expériences, des expertises ou des informations best-in-class.

9. Système d'assistance du conducteur (64) selon l'une des revendications précédentes, **caractérisé en ce qu'**il est réalisé sur un appareil manuel portatif, pouvant être séparé de l'engin (10) et pouvant être raccordé à un système bus de l'engin (10).

10. Engin agricole (10), en particulier hacheuse-chargeuse, avec un système d'assistance du conducteur (64) selon l'une des revendications précédentes.
